# EUROPÄISCHE PATENTSCHRIFT

(11) **EP 4 098 082 B1**
(45) Veröffentlichungstag und Bekanntmachung des Hinweises auf die Patenterteilung: **31.12.2025**
(21) Anmeldenummer: 21700214.6
(22) Anmeldetag: 13.01.2021
(51) Int. Cl.: H05B 6/12

(54) **INDUKTIONSGARGERÄTEVORRICHTUNG**
INDUCTION COOKING DEVICE
DISPOSITIF DE CUISSON À INDUCTION

(30) Priorität: 31.01.2020 EP 20382058
(43) Veröffentlichungstag der Anmeldung: 07.12.2022
(73) Patentinhaber: BSH Hausgeräte GmbH, 81739 München (DE)
(72) Erfinder: FELICES BETRAN, Jorge, 22003 Huesca (ES); LATORRE MOLINS, Alvaro Tomas, 50015 Zaragoza (ES); LOPE MORATILLA, Ignacio, 50010 Zaragoza (ES); MOYA ALBERTIN, Maria Elena, 50002 Zaragoza (ES); SERRANO TRULLEN, Javier, 50017 Zaragoza (ES)
(86) Internationale Anmeldenummer: PCT/EP2021/050537
(87) Internationale Veröffentlichungsnummer: WO 2021/151663

(56) Entgegenhaltungen:
- EP-A1- 2 775 785
- DE-A1- 102013 206 870
- DE-U1- 202009 000 991
- JP-A- 2012 033 513
- US-A1- 2018 020 509

## Beschreibung

Die Erfindung betrifft eine Induktionsgargerätevorrichtung nach dem Oberbegriff des Anspruchs 1.

Aus dem Stand der Technik sind bereits Induktionsgargeräte mit Haltevorrichtungen zur Halterung von zumindest einer Induktionsspule bekannt. Bekannte Induktionsgargeräte eines ersten Typs weisen eine Schicht aus Glimmerpapier, Glasfasertuch und Keramikpapier auf, auf welcher die Induktionsspule zur Halterung mittels eines Silikons befestigt ist. Bekannte Induktionsgargeräte eines zweiten Typs weisen ein, typischerweise aus einem Kunststoff hergestelltes, Gehäuse auf, welches zu einer Aufnahme und Halterung der Induktionsspule vorgesehen ist.

US 2018/020509 A1 offenbart den Oberbegriff des Anspruchs 1.

Die Aufgabe der Erfindung besteht insbesondere, aber nicht beschränkt darauf, darin, eine gattungsgemäße Vorrichtung mit verbesserten Eigenschaften hinsichtlich einer Effizienz bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einer Induktionsgargerätevorrichtung, insbesondere einer Induktionskochfeldvorrichtung, mit zumindest einem Spulenträger zur Halterung zumindest einer Induktionsspule.

Es wird vorgesehen, dass der Spulenträger eine Wärmeableitungseinheit aufweist, welche zu einer Ableitung einer von der Induktionsspule abgegebenen Wärme vorgesehen ist.

Durch eine derartige Ausgestaltung kann vorteilhaft eine Induktionsgargerätevorrichtung mit verbesserten Eigenschaften hinsichtlich einer Effizienz, insbesondere hinsichtlich einer Energieeffizienz und/oder Materialeffizienz und/oder Kosteneffizienz, bereitgestellt werden. Durch eine verbesserte Ableitung der von der Induktionsspule abgegebenen Wärme kann vorteilhaft eine Betriebstemperatur der Induktionsspule reduziert werden, wodurch besonders vorteilhaft temperaturabhängige elektrische Verluste, welche unter anderem beispielsweise durch elektrische Widerstände und/oder parasitäre Kapazitäten bedingt sein können, reduziert werden können. Aufgrund der reduzierten elektrischen Verluste kann ferner vorteilhaft eine durch die Induktionsspule abgegebene elektrische Leistung erhöht und/oder über einen längeren Zeitraum kontinuierlich bereitgestellt werden. Ferner ist vorteilhaft denkbar, dass eine Anzahl von Windungen der Induktionsspule bei gleichbleibender elektrischer Leistung reduziert werden kann, wodurch vorteilhaft Materialkosten eingespart werden können. Des Weiteren ist denkbar, dass Kupferspulen durch Aluminiumspulen ersetzt werden können, wodurch vorteilhaft Materialkosten in besonders hohem Maße reduziert werden können.

Unter einer "Induktionsgargerätevorrichtung" soll insbesondere zumindest ein Teil, insbesondere eine Unterbaugruppe, eines Induktionsgargeräts, insbesondere eines Induktionskochfelds, verstanden werden. Das Induktionsgargerät könnte beispielsweise als ein Induktionsgrill und/oder als ein Induktionsbackofen und/oder als ein Kombigerät mit zusätzlicher Mikrowellenfunktion ausgebildet sein. Vorzugsweise ist das Induktionsgargerät als ein Induktionskochfeld ausgebildet. Es ist insbesondere denkbar, dass das Induktionskochfeld als ein Matrixinduktionskochfeld ausgebildet ist. Insbesondere kann die Induktionsgargerätevorrichtung, insbesondere die Induktionskochfeldvorrichtung, auch das gesamte Induktionsgargerät, insbesondere das gesamte Induktionskochfeld, umfassen.

Unter einem "Spulenträger" soll insbesondere eine Einheit verstanden werden, welche dazu vorgesehen ist, zumindest eine Induktionsspule der Induktionsgargerätevorrichtung oder eines die Induktionsgargerätevorrichtung umfassenden Induktionsgargeräts aufzunehmen und insbesondere die Windungen der Induktionsspule in Position zu halten. Der Spulenträger kann dazu vorgesehen sein, mehrere Induktionsspulen zu haltern. Vorzugsweise ist der Spulenträger dazu vorgesehen, genau eine Induktionsspule aufzunehmen und die Windungen der genau einen Induktionsspule in Position zu halten. Der Spulenträger weist insbesondere zumindest ein Grundträgerelement auf. Das Grundträgerelement weist eine Oberseite und eine der Oberseite gegenüberliegende Unterseite auf. In einer Einbaulage der Induktionsgargerätevorrichtung ist die Oberseite des Grundträgerelements nach oben, insbesondere in Richtung einer Kochfeldplatte des die Induktionsgargerätevorrichtung aufweisenden Induktionsgargeräts, ausgerichtet. Der Spulenträger weist insbesondere zumindest ein Spulenaufnahmeelement auf. Das Spulenaufnahmeelement ist insbesondere dazu vorgesehen, die Induktionsspule aufzunehmen. Das Spulenaufnahmeelement ist insbesondere auf der Oberseite des Grundträgerelements des Spulenträgers angeordnet. Das Spulenaufnahmeelement ist bezüglich einer Haupterstreckungsebene des Spulenträgers insbesondere mittig auf der Oberseite des Grundträgerelements angeordnet. Das Spulenaufnahmeelement kann insbesondere als ein ellipsenförmiger Vorsprung des Grundträgerelements ausgebildet sein. Der Spulenträger kann insbesondere weitere Einheiten und/oder weitere Elemente, beispielsweise Durchlassöffnungen zu einer Kabelführung, aufweisen. Die Induktionsgargerätevorrichtung kann insbesondere mehrere Spulenträger aufweisen. Die Spulenträger der Induktionsgargerätevorrichtung können insbesondere identisch zueinander ausgebildet sein. Vorteilhaft weist die Induktionsgargerätevorrichtung eine Anzahl von Spulenträgern auf, welche mit einer Anzahl von Induktionsspulen, der Induktionsgargerätevorrichtung oder eines die Induktionsgargerätevorrichtung aufweisenden Induktionsgargeräts, übereinstimmt.

Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

Unter einer "Wärmelableitungseinheit" soll insbesondere eine Einheit verstanden werden, welche zu einer Ableitung einer von der Induktionsspule abgegebenen Wärme vorgesehen ist. Die Wärmeableitungseinheit ist insbesondere ausschließlich zu einer Ableitung der von der Induktionsspule abgegebenen Wärme vorgesehen. Die Wärmeableitungseinheit ist insbesondere verschieden von einer Kühleinheit, welche beispielsweise zu einer Kühlung von Wechselrichtern, Gleichrichtern und/oder weiteren elektrischen und/oder elektronischen Bauteilen, der Induktionsgargerätevorrichtung oder eines die Induktionsgargerätevorrichtung umfassenden Induktionsgargeräts vorgesehen ist, ausgebildet. Vorteilhaft erfolgt ein Wärmefluss zu der Ableitung der von der Induktionsspule abgegebenen Wärme mittels Wärmeleitung. Alternativ oder zusätzlich ist denkbar, dass der Wärmefluss zu der Ableitung der von der Induktionsspule abgegebenen Wärme mittels Wärmestrahlung und/oder mittels Konvektion erfolgt.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass der Spulenträger einstückig ausgebildet ist. Hierdurch kann vorteilhaft ein Herstellungsprozess des Spulenträgers vereinfacht werden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzgussverfahren und vorteilhaft aus einem einzelnen Rohling. Vorzugsweise sind die Wärmeableitungseinheit des Spulenträgers und sämtliche weitere Einheiten und/oder weitere Elemente des Spulenträgers, insbesondere der Grundträger und das Spulenaufnahmeelement, in einem Stück geformt ausgebildet. Insbesondere sind die Wärmeableitungseinheit des Spulenträgers und sämtliche weitere Einheiten und/oder Elemente des Spulenträgers in einem Ein- oder Mehrkomponentenspritzgussverfahren hergestellt. Alternativ wäre denkbar, dass die Wärmableitungseinheit separat hergestellt und stoffschlüssig mit dem zumindest einen Element des Spulenträgers, insbesondere mit dem Grundträgerelement, verbunden, beispielsweise angeklebt, ist.

Zudem wird vorgesehen, dass die Wärmeableitungseinheit zumindest ein rippenförmiges erstes Wärmeableitungselement aufweist. Hierdurch kann vorteilhaft eine Oberfläche der Wärmeableitungseinheit erhöht und somit eine insbesondere effiziente Ableitung der von der Induktionsspule abgegebenen Wärme erfolgen. Durch die erhöhte Oberfläche der Wärmeableitungseinheit kann insbesondere eine effiziente Übertragung der Wärme an die die Wärmeableitungseinheit umgebende Luft erfolgen. Unter "rippenförmig" soll in diesem Zusammenhang insbesondere eine geometrische Form eines Objekts verstanden werden, dessen größte Seitenfläche zumindest um den Faktor 2, insbesondere zumindest um den Faktor 4, vorteilhaft zumindest um den Faktor 6, besonders vorteilhaft zumindest um den Faktor 8, vorzugsweise zumindest um den Faktor 9 und besonders bevorzugt zumindest um den Faktor 10, größer ist als eine bezüglich der größten Seitenfläche nächst kleinere Seitenfläche. Insbesondere ist das zumindest eine rippenförmige erste Wärmeableitungselement so angeordnet, dass dessen größte Seitenfläche im Wesentlichen senkrecht zu der Haupterstreckungsebene des Spulenträgers verläuft. Unter "im Wesentlichen senkrecht" soll in diesem Zusammenhang insbesondere eine Ausrichtung einer Richtung relativ zu einer Bezugsrichtung verstanden werden, wobei die Richtung gegenüber der Bezugsrichtung einen Winkel von zumindest 75°, vorteilhaft von zumindest 80°, besonders vorteilhaft von zumindest 85° und vorzugsweise von genau 90° aufweist.

Des Weiteren wird vorgeschlagen, dass die Wärmeableitungseinheit zumindest ein rippenförmiges zweites Wärmeableitungselement aufweist. Hierdurch kann vorteilhaft eine Ableitung der von der Induktionsspule abgegebenen Wärme weiter verbessert werden. Insbesondere weist die Wärmeableitungseinheit eine Vielzahl von, insbesondere rippenförmigen, weiteren Wärmeableitungselementen auf.

Das erste Wärmeableitungselement und das zweite Wärmeableitungselement könnten insbesondere winklig zueinander ausgerichtet sein. Vorteilhaft ist das erste Wärmeableitungselement zumindest im Wesentlichen parallel zu dem zweiten Wärmeableitungselement angeordnet. Hierdurch kann vorteilhaft eine insbesondere platzsparende Anordnung der Wärmeableitungselemente erzielt werden, wodurch eine besonders kompakte Bauweise der Induktionsgargerätevorrichtung erreicht werden kann. Unter "im Wesentlichen parallel" soll in diesem Zusammenhang insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Insbesondere könnten das erste und/oder das zweite Wärmeableitungselement zumindest teilweise entlang einer Umfangsrichtung des Spulenträgers ausgerichtet sein. Vorteilhaft ist jedoch das erste Wärmableitungselement radial nach außen ausgerichtet. Insbesondere sind das erste Wärmeableitungselement und das zweite Wärmeableitungselement radial nach außen ausgerichtet. Hierdurch kann vorteilhaft eine Ableitung der durch die Induktionsspule abgegebenen Wärme weiter verbessert werden. Insbesondere kann vorteilhaft eine besonders effiziente Abführung einer das Wärmableitungselement umgebenden und durch des Wärmableitungselement erwärmten Luft erfolgen. Darunter, dass das Wärmableitungselement "radial nach außen gerichtet" ist soll insbesondere verstanden werden, dass eine Richtung einer längsten Kante des Wärmeableitungselements im Wesentlichen parallel zu der Haupterstreckungsebene des Spulenträgers von innen nach außen, insbesondere von einem inneren ovalen Bereich des Spulenträgers ausgehend zu einer äußeren Kante des Spulenträgers hin, verläuft.

Zudem wird vorgeschlagen, dass der Spulenträger in einem äußeren Endbereich des ersten Wärmeableitungselements zumindest eine Ausnehmung zu einer Abführung erwärmter Luft aufweist. Hierdurch kann vorteilhaft eine Ableitung der durch die Induktionsspule abgegebenen Wärme weiter verbessert werden. Insbesondere kann vorteilhaft eine verbesserte Abführung erwärmter Luft ermöglicht werden. Insbesondere verläuft eine Haupterstreckungsrichtung des ersten Wärmeableitungselements in Richtung der Ausnehmung. Die Ausnehmung ist insbesondere in einem Rahmenelement des Spulenträgers angeordnet. Das Rahmenelement des Spulenträgers verläuft insbesondere entlang einer Umfangsrichtung, insbesondere über einen vollen Umfang, des Spulenträgers von einer Außenkante des Grundkörperelements des Spulenträgers senkrecht zu der Haupterstreckungsebene des Spulenträgers. Die Ausnehmung kann insbesondere halbkreisförmig ausgebildet sein. Insbesondere erfolgt eine Erwärmung der das Wärmableitungselement umgebenden Luft mittels Wärmeleitung und/oder Konvektion und/oder Wärmestrahlung von der Oberfläche des ersten und/oder des zweiten und/oder eines weiteren Wärmeleitelements auf die das Wärmeableitungselement umgebenden Moleküle der Luft. Die Abführung der erwärmten Luft erfolgt insbesondere selbstständig und insbesondere ohne zusätzliche Energiezufuhr und zwar insbesondere auf Grund eines negativen Temperaturgradienten von der Oberfläche des Wärmableitungselements in Richtung der Ausnehmung. Unter einem "äußeren Endbereich" soll insbesondere ein Bereich des Wärmeleitelements verstanden werden, welcher einen minimalen Abstand zu einem senkrecht zu einer Haupterstreckungsrichtung des Spulenträgers verlaufenden Randbereich des Spulenträgers aufweist. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt

Die Wärmeableitungseinheit könnte insbesondere lediglich genau eine Wärmableitungssektion aufweisen. Vorteilhaft bildet die Wärmeableitungseinheit jedoch zumindest zwei zueinander beabstandete Wärmableitungssektionen aus. Hierdurch kann vorteilhaft eine insbesondere gleichmäßige Ableitung der von der Induktionsspule abgegebenen Wärme erfolgen. Unter einer "Wärmeableitungssektion" soll insbesondere ein Teilbereich der Wärmeableitungseinheit verstanden werden, welcher zumindest ein Wärmableitungselement der Wärmeableitungseinheit, insbesondere zumindest eines der rippenförmigen Wärmableitungselemente der Wärmeableitungseinheit, aufweist. Vorzugsweise weist die Wärmeableitungseinheit eine Vielzahl von Wärmeableitungssektionen auf, welche insbesondere jeweils zueinander beabstandet angeordnet und insbesondere bezogen auf die Fläche der Unterseite des Grundträgerelements des Spulenträgers gleichmäßig verteilt sind.

Darüber hinaus wird vorgeschlagen, dass die Wärmeableitungssektionen symmetrisch zueinander angeordnet sind. Hierdurch kann vorteilhaft eine insbesondere über die gesamte Fläche der Unterseite des Grundträgerelements des Spulenträgers gleichmäßige Wärmeableitung erfolgen. Ferner kann vorteilhaft ein Formgebungsprozess der Wärmeableitungseinheit verbessert werden.

Insbesondere könnte die Wärmeableitungseinheit aus einem Metall und/oder einer Keramik ausgebildet sein. Ferner wird vorgeschlagen, dass die Wärmeableitungseinheit einen Kunststoff mit einer Wärmeleitfähigkeit von zumindest 0,2 W/(K m) aufweist und insbesondere aus einem solchen besteht. Hierdurch kann vorteilhaft ein Produktionsprozess verbessert werden. Insbesondere kann eine Wärmeableitungseinheit mit vorteilhaften Eigenschaften hinsichtlich einer effizienten Ableitung der von der Induktionsspule abgegebenen Wärme, insbesondere effizient und/oder kostengünstig, insbesondere in einem Ein- oder Mehrkomponentenspritzgussprozess, hergestellt werden. Insbesondere könnte die Wärmeableitungseinheit Polyphenylensulfid (PPS), mit einer Wärmeleitfähigkeit von zumindest 0,25 W/(K m), aufweisen und insbesondere aus Polyphenylensulfid (PPS) bestehen. Alternativ oder zusätzlich wäre denkbar, dass die Wärmeableitungseinheit Polyamid 66 (PA 66), mit einer Wärmeleitfähigkeit von zumindest 0,23 W/(K m), aufweist und insbesondere aus PA 66 besteht. Ferner wäre alternativ oder zusätzlich denkbar, dass die Wärmeableitungseinheit einen Duroplast, beispielsweise ein Epoxidharz, mit einer Wärmeleitfähigkeit von zumindest 0,2 W/(K m), aufweist und insbesondere aus einem solchen besteht.

Zudem wird vorgeschlagen, dass der Kunststoff eine Temperaturbeständigkeit von zumindest 200°C aufweist. Hierdurch kann vorteilhaft eine besonders beständige und/oder langlebige Wärmeableitungseinheit bereitgestellt werden. Vorzugsweise weist der Kunststoff eine Temperaturbeständigkeit von zumindest 250° auf. Unter einer "Temperaturbeständigkeit" eines Objekts und/oder Materials soll insbesondere eine objektspezifische und/oder materialspezifische Temperatur und/oder ein objektspezifischer und/oder materialspezifischer Temperaturbereich verstanden werden, welcher/welchem das Objekt und/oder Material, insbesondere dauerhaft und unmittelbar, ausgesetzt werden kann, ohne dass sich hierdurch die für eine Funktionsfähigkeit des Objekts und/oder Materials zu einer Erfüllung einer vorgesehen Funktion maßgeblichen Objekt- und/oder Materialeigenschaften über ein, für die vorgesehene Anwendung und/oder Funktion des Objekts und/oder Materials, tolerierbares Maß hinaus verändern. Insbesondere ist das Objekt und/oder Material bei der Temperatur und/oder in dem Temperaturbereich, welcher die Temperaturbeständigkeit des Objekts und/oder Materials definiert, funktionsfähig und/oder unbeeinträchtigt und/oder unbeschädigt.

Ferner wird vorgeschlagen, dass die Wärmeableitungseinheit zumindest eine Beschichtung zur Verbesserung der Wärmeleitfähigkeit aufweist. Hierdurch kann vorteilhaft eine Ableitung der von der Induktionsspule abgegebenen Wärme weiter verbessert werden. Insbesondere weist die Wärmeableitungseinheit ein Kernmaterial auf, welches als ein Substrat für die Beschichtung ausgebildet ist. Die Beschichtung weist insbesondere ein Material mit einer, insbesondere gegenüber dem Kernmaterial der Wärmeableitungseinheit, hohen Wärmeleitfähigkeit auf und besteht insbesondere aus einem solchen Material. Unter einer "hohen Wärmeleitfähigkeit" soll insbesondere eine Wärmeleitfähigkeit von zumindest 15 W/(K m), vorteilhaft von zumindest 20 W/(K m), besonders vorteilhaft von zumindest 25 W/(K m), vorzugsweise von zumindest 30 W/(K m) und besonders bevorzugt von zumindest 35 W/(K m) verstanden werden. Die Beschichtung weist insbesondere ein Material mit guten elektrisch isolierenden Eigenschaften auf und besteht insbesondere aus einem solchen Material. Unter einem "Material mit guten elektrisch isolierenden Eigenschaften" soll insbesondere ein Material mit einem spezifischen elektrischen Widerstand von zumindest 10¹⁰ Ω cm, vorteilhaft von zumindest 10¹¹ Ω cm, besonders vorteilhaft von zumindest 10¹² Ω cm, vorzugsweise von zumindest 10¹³ Ω cm und besonders bevorzugt von zumindest 10¹⁴ Ω cm und mit einer Durchschlagfestigkeit von zumindest 15 kV/mm, vorteilhaft von zumindest 20 kV/mm, besonders vorteilhaft von zumindest 25 kV/mm, vorzugsweise von zumindest 30 kV/mm und besonders bevorzugt von zumindest 35 kV/mm, verstanden werden. Die Beschichtung kann insbesondere ein keramisches Material mit einer hohen Wärmeleitfähigkeit und guten elektrisch isolierenden Eigenschaften, vorzugsweise Aluminiumoxid, aufweisen und insbesondere aus einem solchen bestehen. Alternativ wäre denkbar, dass die Wärmeableitungseinheit ein Kernmaterial mit einer hohen Wärmeleitfähigkeit aufweist, welches mit einer Beschichtung mit guten elektrisch isolierenden Eigenschaften beschichtet ist. Insbesondere könnte die Wärmeableitungseinheit ein metallisches Kernmaterial mit einer hohen Wärmeleitfähigkeit, beispielsweise eine Aluminiumlegierung, aufweisen, welches mit einem Kunststoff mit guten elektrisch isolierenden Eigenschaften, beispielsweise Polyphenylensulfid (PPS), beschichtet ist. Die Beschichtung kann insbesondere durch ein Beschichtungsverfahren, insbesondere durch ein Siebdruckverfahren, durch Spin-Coating, durch Tauchlackieren (dipcoating), durch ein Sol-Gel-Verfahren, durch Aufsprühen, durch ein Tintenstrahldruckverfahren, durch ein chemisches Gasabscheidungsverfahren (CVD: Chemical Vapor Deposition) und/oder durch ein physikalisches Gasabscheidungsverfahren (PVD: Physical Vapor Deposition), auf das Kernmaterial der Wärmeableitungseinheit aufgebracht sein. Die Induktionsgargerätevorrichtung soll hierbei nicht auf die oben beschriebene Anwendung und Ausführungsform beschränkt sein. Insbesondere kann die Induktionsgargerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: Ein Induktionsgargerät mit einer Induktionsgargerätevorrichtung in einer schematischen Ansicht,
- Fig. 2: einen Spulenträger der Induktionsgargerätevorrichtung in einer schematischen Ansicht,
- Fig. 3: den Spulenträger mit einer Induktionsspule in einer schematischen Ansicht,
- Fig. 4: den Spulenträger mit einer Wärmeableitungseinheit in einer schematischen Ansicht und
- Fig. 5: den Spulenträger mit der Wärmeableitungseinheit und Ferriten in einer schematischen Ansicht.

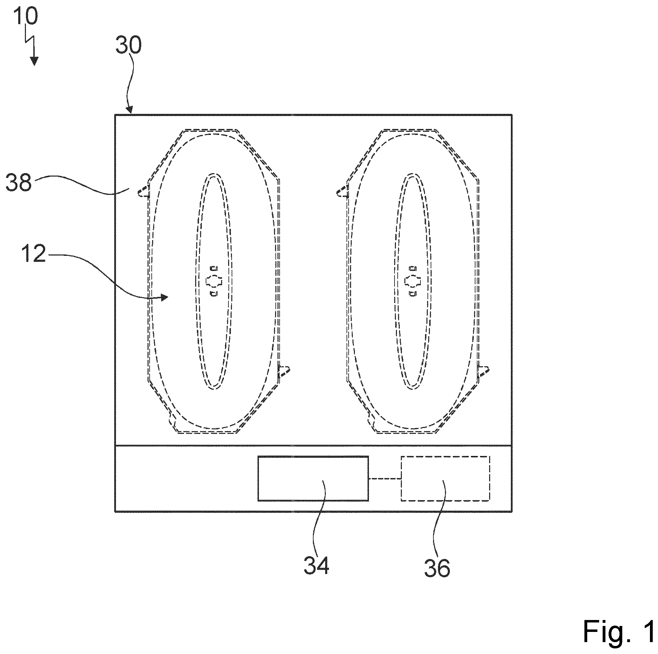

Figur 1 zeigt ein Induktionsgargerät 30. Das Induktionsgargerät ist als ein Induktionskochfeld ausgebildet. Das Induktionsgargerät 30 weist eine Kochfeldplatte 38 auf. Das Induktionsgargerät 30 weist eine Bedienerschnittstelle 34 auf. Die Bedienerschnittstelle 34 ist auf einer einem Bediener zugewandten Seite der Kochfeldplatte 38 angeordnet. Die Bedienerschnittstelle 34 ist zu einer Eingabe von Bedieneinstellungen durch den Bediener und zu einer Ausgabe von Informationen an den Bediener des Induktionsgargeräts 30 vorgesehen. Das Induktionsgargerät 30 weist eine Steuereinheit 36 auf. Die Steuereinheit 36 ist zu einer Steuerung von zumindest einer Funktion des Induktionsgargeräts 30 vorgesehen. Die Steuereinheit 36 ist unterhalb der Kochfeldplatte 38 auf einer dem Bediener abgewandten Seite angeordnet.

Das Induktionsgargerät 30 weist eine Induktionsgargerätevorrichtung 10 auf. Die Induktionsgargerätevorrichtung 10 ist als eine Induktionskochfeldvorrichtung ausgebildet. Die Induktionsgargerätevorrichtung 10 umfasst einen Spulenträger 12. Der Spulenträger 12 der Induktionsgargerätevorrichtung 10 ist auf der dem Benutzer abgewandten Seite unterhalb der Kochfeldplatte 38 des Induktionsgargeräts 30 angeordnet.

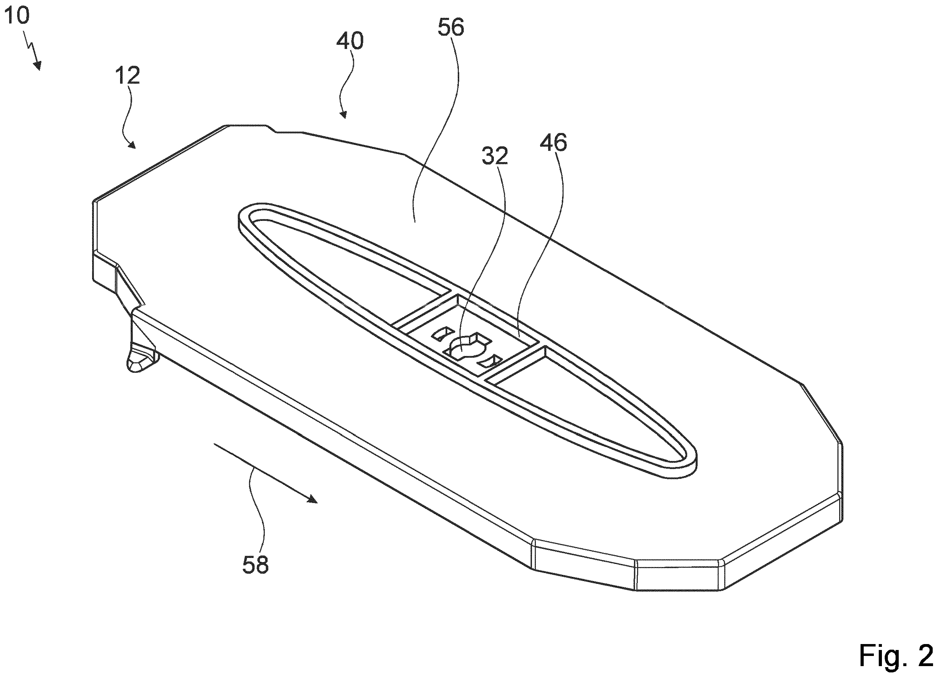

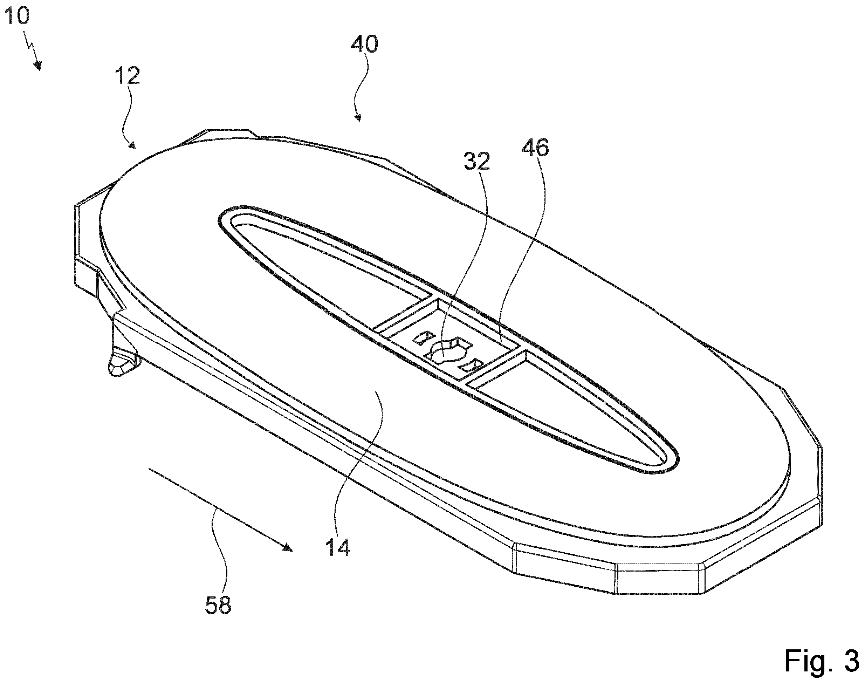

Figur 2 zeigt den Spulenträger 12 der Induktionsgargerätevorrichtung 10 in einer schematischen Ansicht. Der Spulenträger 12 weist ein Grundträgerelement 56 auf. In Figur 2 ist der Spulenträger in einer Ansicht auf eine Oberseite 40 des Grundträgerelements 56 dargestellt. Der Spulenträger 12 ist zur Halterung einer Induktionsspule 14 des Induktionsgargeräts 30 vorgesehen. Der Spulenträger 12 weist ein Spulenaufnahmeelement 32 auf. Das Spulenaufnahmeelement 32 ist zu einer Aufnahme und Positionierung der Induktionsspule 14 des Induktionsgargeräts 30 vorgesehen (vgl. Figur 3). Das Spulenaufnahmeelement 32 ist auf der Oberseite 40 des Grundträgerelements 56 angeordnet. Das Spulenaufnahmeelement 32 ist als eine ellipsenförmige Erhebung um einen Mittelpunkt 46 des Grundträgerelements 56 ausgebildet und erstreckt sich im Wesentlichen senkrecht zu einer Haupterstreckungsebene 58 des Spulenträgers 12.

Figur 3 zeigt den Spulenträger 12 der Induktionsgargerätevorrichtung 10 mit der Induktionsspule 14 des Induktionsgeräts 30. Die Induktionsspule 14 weist mehrere Windungen auf (nicht dargestellt). Die Induktionsspule 14 ist durch das Spulenaufnahmeelement 32 des Spulenträges 12 aufgenommen. Die Windungen der Induktionsspule 14 sind in Form einer Ellipse um das Spulenaufnahmeelement 32 gewickelt. Das Spulenaufnahmeelement 32 hält die Windungen der Induktionsspule 14 in Position.

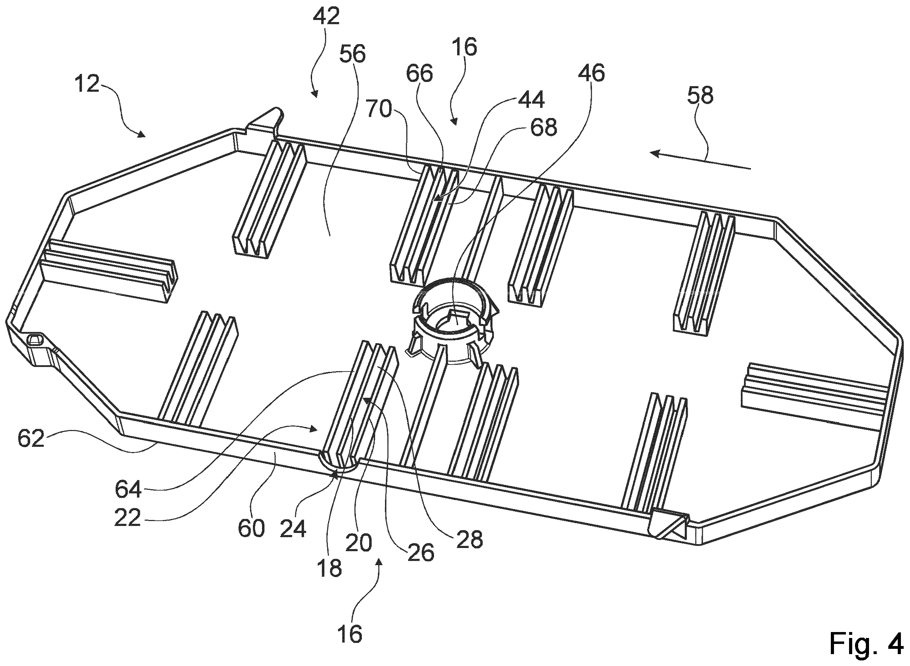

Figur 4 zeigt den Spulenträger 12 der Induktionsgargerätevorrichtung 10 in einer Ansicht auf eine Unterseite 42 des Grundträgerelements 56. Der Spulenträger 12 weist eine Wärmeableitungseinheit 16 auf. Die Wärmeableitungseinheit 16 ist zu einer Ableitung einer von der Induktionsspule 14 abgegebenen Wärme in einem Betriebszustand des Induktionsgargeräts 30 vorgesehen.

Der Spulenträger 12 ist einstückig ausgebildet. Die Wärmeableitungseinheit 16 des Spulenträgers 12 weist einen Kunststoff mit einer Wärmeleitfähigkeit von zumindest 0,2 W/(K m) auf. Die Wärmeableitungseinheit 16 weist einen Kunststoff mit eine Temperaturbeständigkeit von zumindest 200 C auf. Die Wärmeableitungseinheit 16 besteht insbesondere aus einem thermoplastischen Kunststoff und zwar aus Polyphenylensulfid (PPS) mit einer Wärmeleitfähigkeit von zumindest 0,25 W/(K m) und einer Temperaturbeständigkeit von zumindest 250°C. Der Spulenträger 12 ist samt der Wärmeableitungseinheit 16 insbesondere aus einem Stück in einem Spritzgussverfahren aus PPS hergestellt.

Die Wärmeableitungseinheit 16 weist ein erstes Wärmeableitungselement 18 auf. Das erste Wärmeableitungselement 18 ist rippenförmig ausgebildet. Das erste Wärmeableitungselement 18 ist radial nach außen ausgerichtet. Die Wärmeableitungseinheit 16 weist ein zweites Wärmeableitungselement 20 auf. Das zweite Wärmeableitungselement 20 ist rippenförmig ausgebildet. Das erste Wärmeableitungselement 18 ist zumindest im Wesentlichen parallel zu dem zweiten Wärmeableitungselement 20 angeordnet.

Die Wärmeableitungseinheit 16 weist eine Beschichtung 28 zur Verbesserung der Wärmeleitfähigkeit auf. Die Beschichtung 28 besteht aus einem Aluminiumoxid mit einer Wärmeleitfähigkeit von zumindest 35 W/(K m). Die Beschichtung 28 ist mittels eines chemischen Gasabscheidungsverfahrens auf die Wärmeableitungseinheit 16 aufgebracht.

Der Spulenträger 12 weist einen Rand 60 auf. Der Rand 60 verläuft umlaufend entlang einer äußeren Kante 62 des Grundträgerelements 56 des Spulenträgers 12. Der Rand 60 erstreckt sich im Wesentlichen senkrecht zu einer Haupterstreckungsebene 58 des Spulenträgers 12. In einem äußeren Endbereich 22 des ersten Wärmeableitungselements 18 der Wärmeableitungseinheit 16 weist der Rand 60 des Spulenträgers 12 eine Ausnehmung 24 auf. Die Ausnehmung 24 ist zu einer Abführung erwärmter Luft vorgesehen.

Die Wärmeableitungseinheit 16 bildet eine Wärmeableitungssektion 26 aus. Die Wärmeableitungssektion 26 umfasst das erste Wärmeableitungselement 18, das zweite Wärmeableitungselement 20 und ein drittes Wärmeableitungselement 64. Die Wärmeableitungseinheit 16 bildet eine weitere Wärmeableitungssektion 44 aus. Die weitere Wärmeableitungssektion 44 umfasst ein weiteres erstes Wärmeableitungselement 66, ein weiteres zweites Wärmeableitungselement 68 und ein weiteres drittes Wärmeableitungselement 70. Das weitere erste Wärmeableitungselement 66, das weitere zweites Wärmeableitungselement 68 und das weitere dritte Wärmeableitungselement 70 sind rippenförmig ausgebildet und jeweils im Wesentlichen parallel zueinander angeordnet. Die Wärmeableitungssektion 26 und die weitere Wärmeableitungssektion 44 sind zueinander beabstandet angeordnet. Die Wärmeableitungssektion 26 und die weitere Wärmeableitungssektion 44 sind zueinander symmetrisch angeordnet.

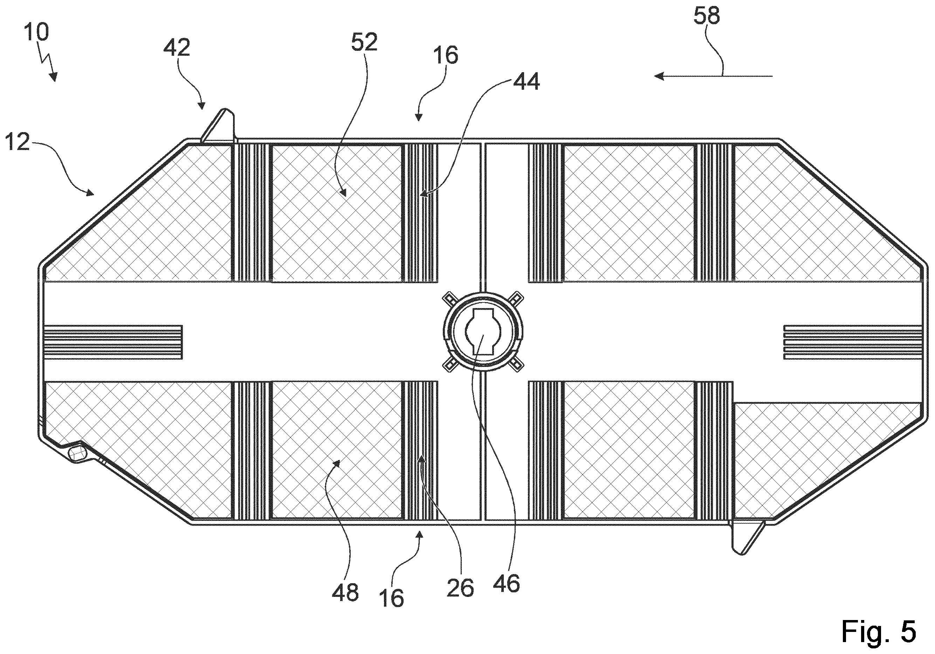

Figur 5 zeigt den Spulenträger 12 mit der Wärmeableitungseinheit 16. Neben der Wärmeableitungssektion 26 der Wärmeableitungseinheit 16 ist ein Ferrit 48 des Induktionsgargeräts 30 angeordnet. Neben der weiteren Wärmeableitungssektion 44 ist ein weiterer Ferrit 52 des Induktionsgargeräts 30 angeordnet. In einem Betriebszustand des Induktionsgargeräts 30 sind die Ferrite 48, 52 dazu vorgesehen, ein durch die Induktionsspule 14 erzeugtes elektromagnetisches Feld zu bündeln und eine Abstrahlung dieses elektromagnetischen Feldes in Richtung der Unterseite 42 zumindest im Wesentlichen zu verhindern.

Von mehrfach vorhandenen Objekten ist in den Figuren jeweils lediglich eines mit einem Bezugszeichen versehen.

### Bezugszeichen

- 10: Induktionsgargerätevorrichtung
- 12: Spulenträger
- 14: Induktionsspule
- 16: Wärmeableitungseinheit
- 18: erstes Wärmeableitungselement
- 20: zweites Wärmeableitungselement
- 22: äußerer Endbereich
- 24: Ausnehmung
- 26: erste Wärmeableitungssektion
- 28: Beschichtung
- 30: Induktionsgargerät
- 32: Spulenaufnahmeelement
- 34: Bedienerschnittstelle
- 36: Steuereinheit
- 38: Kochfeldplatte
- 40: Oberseite
- 42: Unterseite
- 44: weitere Wärmeableitungssektion
- 46: Mittelpunkt
- 48: Ferrit
- 52: weiterer Ferrit
- 56: Grundträgerelement
- 58: Haupterstreckungsebene
- 60: Rand
- 62: äußere Kante
- 64: drittes Wärmeableitungselement
- 66: weiteres erstes Wärmeableitungselement
- 68: weiteres zweites Wärmeableitungselement
- 70: weiteres drittes Wärmeableitungselement

## Patentansprüche

1. Induktionsgargerätevorrichtung (10), insbesondere Induktionskochfeldvorrichtung, mit zumindest einem Spulenträger (12) zur Halterung zumindest einer Induktionsspule (14), wobeider Spulenträger (12) eine Wärmeableitungseinheit (16) aufweist, welche zu einer Ableitung einer von der Induktionsspule (14) abgegebenen Wärme vorgesehen ist, **dadurch gekennzeichnet, dass** die Wärmeableitungseinheit (16) zumindest ein rippenförmiges erstes Wärmeableitungselement (18) aufweist, wobei das zumindest eine rippenförmige erste Wärmeableitungselement (18) so angeordnet ist, dass dessen größte Seitenfläche im Wesentlichen senkrecht zu einer Haupterstreckungsebene des Spulenträgers (12) verläuft, und wobei das zumindest eine rippenförmige erste Wärmeableitungselement (18) auf einer Unterseite (42) des Spulenträgers (12) angeordnet ist, wobei die Unterseite (42) des Spulenträgers (12) entgegengesetzt zu einer zur Aufnahme der Induktionsspule (14) vorgesehenen Fläche des Spulenträgers (12) angeordnet ist.

2. Induktionsgargerätevorrichtung (10) nach Anspruch 1, **dadurch gekennzeichnet, dass** der Spulenträger (12) einstückig ausgebildet ist.

3. Induktionsgargerätevorrichtung nach Anspruch 1 oder 2, **dadurch gekennzeichnet, dass** die Wärmeableitungseinheit (16) zumindest ein rippenförmiges zweites Wärmeableitungselement (20) aufweist.

4. Induktionsgargerätevorrichtung (10) nach Anspruch 3, **dadurch gekennzeichnet, dass** das erste Wärmeableitungselement (18) zumindest im Wesentlichen parallel zu dem zweiten Wärmeableitungselement (20) angeordnet ist.

5. Induktionsgargerätevorrichtung (10) nach einem der Ansprüche einem der vorhergehenden Ansprüche, **dadurch gekennzeichnet, dass** das erste Wärmeableitungselement (18) radial nach außen ausgerichtet ist.

6. Induktionsgargerätevorrichtung (10) nach einem der vorhergehenden Ansprüche, **dadurch gekennzeichnet, dass** der Spulenträger (12) in einem äußeren Endbereich (22) des ersten Wärmeableitungselements (18) zumindest eine Ausnehmung (24) zu einer Abführung erwärmter Luft aufweist.

7. Induktionsgargerätevorrichtung (10) nach einem der vorhergehenden Ansprüche, **dadurch gekennzeichnet, dass** die Wärmeableitungseinheit (16) zumindest zwei zueinander beabstandete Wärmeableitungssektionen (26, 44) ausbildet.

8. Induktionsgargerätevorrichtung (10) nach Anspruch 7, **dadurch gekennzeichnet, dass** die Wärmeableitungssektionen (26, 44) symmetrisch zueinander angeordnet sind.

9. Induktionsgargerätevorrichtung (10) nach einem der vorhergehenden Ansprüche, **dadurch gekennzeichnet, dass** die Wärmeableitungseinheit (16) einen Kunststoff mit einer Wärmeleitfähigkeit von zumindest 0,2 W/(K m) aufweist und insbesondere aus einem solchen besteht.

10. Induktionsgargerätevorrichtung (10) nach Anspruch 9, **dadurch gekennzeichnet, dass** der Kunststoff eine Temperaturbeständigkeit von zumindest 200°C aufweist.

11. Induktionsgargerätevorrichtung (10) nach einem der vorhergehenden Ansprüche, **dadurch gekennzeichnet, dass** die Wärmeableitungseinheit (16) zumindest eine Beschichtung (28) zur Verbesserung der Wärmeleitfähigkeit aufweist.

12. Induktionsgargerät (30), insbesondere Induktionskochfeld, mit einer Induktionsgargerätevorrichtung (10) nach einem der vorhergehenden Ansprüche.

## Claims

1. Induction cooking appliance apparatus (10), in particular induction hob apparatus, with at least one coil carrier (12) for holding at least one induction coil (14), wherein the coil carrier (12) has a heat dissipation unit (16) which is provided for dissipating heat emitted by the induction coil (14), **characterised in that** the heat dissipation unit (16) has at least one rib-shaped first heat dissipation element (18), wherein the at least one rib-shaped first heat dissipation element (18) is arranged such that the largest side area thereof runs substantially perpendicularly to a main extension plane of the coil carrier (12), and wherein the at least one rib-shaped first heat dissipation element (18) is arranged on a lower side (42) of the coil carrier (12), wherein the lower side (42) of the coil carrier (12) is arranged opposite to an area of the coil carrier (12) provided for receiving the induction coil (14).

2. Induction cooking appliance apparatus (10) according to claim 1, **characterised in that** the coil carrier (12) is embodied in one piece.

3. Induction cooking appliance apparatus according to claim 1 or 2, **characterized in that** the heat dissipation unit (16) has at least one rib-shaped second heat dissipation element (20).

4. The induction cooking appliance apparatus (10) as claimed in claim 3, **characterised in that** the first heat dissipation element (18) is arranged at least substantially parallel to the second heat dissipation element (20).

5. Induction cooking appliance apparatus (10) according to one of claims one of the preceding claims, **characterised in that** the first heat dissipation element (18) is oriented radially outward.

6. Induction cooking appliance apparatus (10) according to one of the preceding claims, **characterised in that** the coil carrier (12) has at least one recess (24) for guiding away heated air in an outer end region (22) of the first heat dissipation element (18).

7. Induction cooking appliance apparatus (10) according to one of the preceding claims, **characterised in that** the heat dissipation unit (16) has at least two heat dissipation sections (26, 44) arranged at a distance from one another.

8. Induction cooking appliance apparatus (10) according to claim 7, **characterised in that** the heat dissipation sections (26, 44) are arranged symmetrically to one another.

9. Induction cooking appliance apparatus (10) according to one of the preceding claims, **characterised in that** the heat dissipation unit (16) has a plastic material with a thermal conductivity of at least 0.2 W/(K m) and in particular consists of such a material.

10. Induction cooking appliance apparatus (10) according to claim 9, **characterised in that** the plastic material has a temperature resistance of at least 200°C.

11. Induction cooking appliance apparatus (10) according to one of the preceding claims, **characterised in that** the heat dissipation unit (16) has at least one coating (28) to improve the thermal conductivity.

12. Induction cooking appliance (30), in particular induction hob, with an induction cooking appliance apparatus (10) according to one of the preceding claims.

## Revendications

1. Dispositif pour appareil de cuisson à induction (10), en particulier dispositif pour table de cuisson à induction, comprenant au moins un support de bobine (12) pour retenir au moins une bobine d'induction (14),
dans lequel le support de bobine (12) comprend un ensemble de dissipation de chaleur (16), qui est configuré pour dissiper une chaleur émise par la bobine d'induction (14),
**caractérisé en ce que** l'ensemble de dissipation de chaleur (16) comprend au moins un premier élément de dissipation de chaleur en forme de nervure (18),
dans lequel l'au moins un premier élément de dissipation de chaleur en forme de nervure (18) est disposé de sorte que sa plus grande surface latérale est sensiblement perpendiculaire à un plan d'extension principale du support de bobine (12), et
dans lequel l'au moins un premier élément de dissipation de chaleur en forme de nervure (18) est disposé sur une face inférieure (42) du support de bobine (12),
la face inférieure (42) du support de bobine (12) étant disposée de façon opposée à une surface du support de bobine (12) conçue pour recevoir la bobine d'induction (14).

2. Dispositif pour appareil de cuisson à induction (10) selon la revendication 1, **caractérisé en ce que** le support de bobine (12) est formé d'une seule pièce.

3. Dispositif pour appareil de cuisson à induction (10) selon la revendication 1 ou 2, **caractérisé en ce que** l'ensemble de dissipation de chaleur (16) comprend au moins un deuxième élément de dissipation de chaleur en forme de nervure (20).

4. Dispositif pour appareil de cuisson à induction (10) selon la revendication 3, **caractérisé en ce que** le premier élément de dissipation de chaleur (18) est disposé au moins essentiellement de façon parallèle au deuxième élément de dissipation de chaleur (20).

5. Dispositif pour appareil de cuisson à induction (10) selon l'une des revendications précédentes, **caractérisé en ce que** le premier élément de dissipation de chaleur (18) est orienté radialement vers l'extérieur.

6. Dispositif pour appareil de cuisson à induction (10) selon l'une des revendications précédentes, **caractérisé en ce que** le support de bobine (12) comprend au moins un évidement (24) pour évacuer l'air échauffé dans une région terminale extérieure (22) du premier élément de dissipation de chaleur (18).

7. Dispositif pour appareil de cuisson à induction (10) selon l'une des revendications précédentes, **caractérisé en ce que** l'ensemble de dissipation de chaleur (16) comprend au moins deux sections de dissipation de chaleur (26, 44) espacées l'une de l'autre.

8. Dispositif pour appareil de cuisson à induction (10) selon la revendication 7, **caractérisé en ce que** les sections de dissipation de chaleur (26, 44) sont agencées symétriquement l'une à l'autre.

9. Dispositif pour appareil de cuisson à induction (10) selon l'une des revendications précédentes, **caractérisé en ce que** l'ensemble de dissipation de chaleur (16) comprend une matière plastique présentant une conductivité thermique d'au moins 0,2 W/(K m) et est constitué en particulier d'une telle matière.

10. Dispositif pour appareil de cuisson à induction (10) selon la revendication 9, **caractérisé en ce que** la matière plastique présente une stabilité en température jusqu'au moins 200 °C.

11. Dispositif pour appareil de cuisson à induction (10) selon l'une des revendications précédentes, **caractérisé en ce que** l'ensemble de dissipation de chaleur (16) comprend au moins un revêtement (28) permettant d'améliorer la conductivité thermique.

12. Appareil de cuisson à induction (30), en particulier table de cuisson à induction, comprenant un dispositif pour appareil de cuisson à induction (10) selon l'une des revendications précédentes.
